(19) **Europäisches Patentamt / European Patent Office / Office européen des brevets**

(11) **EP 4 296 624 B1**

(12) **EUROPEAN PATENT SPECIFICATION**

(45) Date of publication and mention
of the grant of the patent:
**15.04.2026 Bulletin 2026/16**

(21) Application number: **21932940.6**

(22) Date of filing: **23.03.2021**

(51) International Patent Classification (IPC):
**G01H 9/00** $^{(2006.01)}$      **G01D 5/353** $^{(2006.01)}$

(52) Cooperative Patent Classification (CPC):
**G01H 9/004; G01B 9/02003; G01B 9/02014;
G01B 9/02041; G01B 9/02081; G01B 9/02083;**
G01B 2290/45

(86) International application number:
**PCT/JP2021/012078**

(87) International publication number:
**WO 2022/201330 (29.09.2022 Gazette 2022/39)**

(54) **SIGNAL PROCESSING METHOD AND SIGNAL PROCESSING DEVICE**

SIGNALVERARBEITUNGSVERFAHREN UND SIGNALVERARBEITUNGSVORRICHTUNG

PROCÉDÉ DE TRAITEMENT DE SIGNAL ET DISPOSITIF DE TRAITEMENT DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.12.2023 Bulletin 2023/52**

(73) Proprietor: **NTT, Inc.
Tokyo 100-8116 (JP)**

(72) Inventors:
• **WAKISAKA, Yoshifumi**
**Musashino-shi, Tokyo 180-8585 (JP)**
• **OKAMOTO, Tatsuya**
**Musashino-shi, Tokyo 180-8585 (JP)**
• **IIDA, Daisuke**
**Musashino-shi, Tokyo 180-8585 (JP)**
• **KOSHIKIYA, Yusuke**
**Musashino-shi, Tokyo 180-8585 (JP)**
• **KIKUCHI, Masashi**
**Musashino-shi, Tokyo 180-8585 (JP)**
• **HONDA, Nazuki**
**Musashino-shi, Tokyo 180-8585 (JP)**

(74) Representative: **Hoffmann Eitle
Patent- und Rechtsanwälte PartmbB
Arabellastraße 30
81925 München (DE)**

(56) References cited:
**JP-A- 2015 500 483      JP-A- 2017 026 503
JP-A- 2017 026 503      JP-A- 2019 035 682
JP-A- 2019 035 682      JP-A- 2020 085 793
US-A1- 2020 259 563**

• XU XIAOHUA ET AL: "Toward Absolute Phase
Change Recovery With InSAR: Correcting for
Earth Tides and Phase Unwrapping
Ambiguities", IEEE TRANSACTIONS ON
GEOSCIENCE AND REMOTE SENSING, IEEE,
USA, vol. 58, no. 1, 1 January 2020 (2020-01-01),
pages 726 - 733, XP011763138, ISSN: 0196-2892,
[retrieved on 20191226], DOI: 10.1109/
TGRS.2019.2940207
• CHEN BO ET AL: "SGRS: A sequential gesture
recognition system using COTS RFID", 2018
IEEE WIRELESS COMMUNICATIONS AND
NETWORKING CONFERENCE (WCNC), IEEE, 15
April 2018 (2018-04-15), pages 1 - 6,
XP033354993, DOI: 10.1109/WCNC.2018.8376998

**Description**

Technical Field

The present invention relates to a signal processing method and a signal processing device.

Background Art

Conventionally, as a means for measuring physical vibration applied to an optical fiber in a distributed manner in a longitudinal direction of the optical fiber, a method called distributed acoustic sensing (DAS) is known in which pulsed test light is incident to a measurement target optical fiber and backscattered light due to Rayleigh scattering is detected (refer to, for example, Non Patent Literature 1).

In DAS, a change in an optical path length of an optical fiber due to physical vibration applied to the optical fiber is captured such that the vibration is sensed. By detecting vibration, it is possible to detect movement of an object around a measurement target optical fiber.

As a method of detecting backscattered light in DAS, there is a method of measuring an intensity of scattered light from each point of a measurement target optical fiber and observing a temporal change in the intensity of the scattered light, which is called DAS-intensity (DAS-I). Although DAS-I has a feature that a device configuration can be simplified, it is not possible to quantitatively calculate an optical path length change of the fiber due to vibration from the scattered light intensity, and thus DAS-I is a qualitative measurement method (refer to, for example, Non Patent Literature 2).

On the other hand, DAS-phase (DAS-P), which is a method of measuring a phase of scattered light from each point of a measurement target optical fiber and observing a temporal change in the phase, has also been researched and developed. Although a device configuration and signal processing in DAS-P are more complicated than those in DAS-I, since a phase changes linearly with respect to a change in an optical path length of a fiber due to vibration and a rate of change is also the same in an optical fiber longitudinal direction, vibration can be quantitatively measured, and thus vibration applied to a measurement target optical fiber can be faithfully reproduced (refer to, for example, Non Patent Literature 2).

In measurement using DAS-P, a light pulse is incident to a measurement target optical fiber, and a phase of scattered light at time t at which the light pulse is incident is measured in a distributed manner in a longitudinal direction of the optical fiber. That is, a phase $\theta(l, t)$ of the scattered light is measured with a distance from an incidence end of the optical fiber as 1. The light pulse is repeatedly incident to the measurement target optical fiber at a time interval T, and thus a change over time $\theta(l, nT)$ in the phase of the scattered light at the time $t = nT$, n being an integer, is measured for each point in the longitudinal direction of the measurement target optical fiber.

However, in practice, the time for measuring a point at the distance 1 is delayed from the time at which the pulse is incident by a time during which the light pulse propagates from the incidence end over the distance 1. It is noted that the time measured by a measurement device is delayed by the time required for the scattered light to return to the incidence end. It is known that a magnitude of physical vibration applied in a section from the distance 1 to a distance $1 + \delta l$ at each time nT is proportional to a difference $\delta\theta(l, nT)$ between the phase $\theta(l+\delta l, nT)$ at the distance $1 + \delta l$ and the phase $\theta(l, nT)$ at the distance 1. That is, Equation (1) is satisfied with time zero as a reference.

[Math. 1]

$$(\text{Amplitude of vibration}) \propto \delta\theta(l, nT) - \delta\theta(l, 0)$$

$$= [\theta(l + \delta l, nT) - \theta(l, nT)] - [\theta(l + \delta l, 0) - \theta(l, 0)] \quad \cdots (1)$$

$$= [\theta(l + \delta l, nT) - \theta(l + \delta l, 0)] - [\theta(l, nT) - \theta(l, 0)]$$

As a device configuration for detecting a phase of scattered light, there are a configuration of direct detection in which backscattered light from a measurement target optical fiber is directly detected by a photodiode or the like, and a configuration using coherent detection in which backscattered light is multiplexed with separately prepared reference light and detected (refer to, for example, Non Patent Literature 1).

A mechanism for performing coherent detection and calculating a phase is subdivided into two mechanisms such as a mechanism for software-based processing using Hilbert transform and a mechanism for hardware-based processing using a 90-degree optical hybrid. In both methods, an in-phase component I(l, nT) and a quadrature component Q(l, nT) of scattered light are acquired, and a phase is calculated by using Equation (2).

[Math. 2]

$$\theta_{cal}(l, nT) = \text{Arctan}\left[\frac{Q(l, nT)}{I(l, nT)}\right] \qquad \cdots (2)$$

However, an output value by the 4-quadrant arc tangent operator Arctan is in the range of $(-\pi, \pi]$ in radians, and $2m\pi + \theta_{cal}(l, nT)$ all have the same vector direction on an xy plane with m as any integer, and thus an uncertainty of $2m\pi$ exists in $\theta_{cal}(l, nT)$ calculated above. Therefore, the influence of the uncertainty also appears in the difference $\delta\theta_{cal}(l, nT)$ calculated from the phase $\theta_{cal}(l+\delta l, nT)$ at the distance $1 + \delta l$ and the phase $\theta_{cal}(l, nT)$ at the distance l.

Therefore, as a more accurate evaluation method for $\delta\theta(l, nT)$, signal processing such as phase unwrapping is further performed. In addition, an actual phase change that is a measurement target is $\delta\theta(l, nT)$, and a measured value of a phase change obtained through calculation from a measurement result is $\delta\theta_{cal}(l, nT)$, and both are distinguished.

In the general phase unwrapping, a phase after unwrapping is set as $\delta\theta_{cal}^{unwrap}(l, nT)$, $\delta\theta_{cal}^{unwrap}(l, 0) = \delta\theta_{cal}(l, 0)$, and then successive calculations are performed as follows in ascending order of n. For any integer p, in a case where $|\theta_{cal}(l, (p+1)T)-\delta\theta_{cal}^{unwrap}(1, pT)|$ is larger than $\pi$ radians, an appropriate integer q is selected such that $|\delta\theta_{cal}(l, (p+1)T)+2\pi q-\delta\theta_{cal}^{unwrap}(l, pT)|$ is $\pi$ radians or less, and a phase $\delta\theta_{cal}^{unwiap}(l, (p+1)T)$ after unwrapping is calculated as in Equation (3). The superscript unwrap indicates a phase after unwrapping.
[Math. 3]

$$\delta\theta_{cal}^{unwrap}(l, (p+1)T) = \delta\theta_{cal}(l, (p+1)T) + 2\pi q \qquad \cdots (3)$$

In the phase $\delta\theta_{cal}^{unwrap}(l, nT)$ after unwrapping obtained by Equation (3), $\delta\theta(l, nT)$ can be accurately obtained only in a case where an absolute value of the phase change between adjacent times of $\delta\theta$ is smaller than $\pi$ radians at any time and location and in an ideal case where $\delta\theta_{cal}(l, nT)$ is not accompanied by noise.

In a case where vibration having a high vibration frequency or vibration having a large vibration amplitude is measured, there may be a time $pT = p_sT$ at which $|\delta\theta(l, (p+1)T)-\delta\theta(l, pT)|$ is inherently larger than $\pi$ radians at any point l. However, since the phase unwrapping process is performed at such a time $p_sT$, the integer q in Equation (3) is erroneously selected. Due to such failure of the phase unwrapping process, $\delta\theta_{cal}^{unwrap}(l, nT)$ does not match $\delta\theta(l, nt)$, and $\delta\theta(l, nT)$ cannot be accurately obtained.

For this problem, measures may be taken such that $|\delta\theta(l, (p+1)T)-\delta\theta(l, pT)|$ is equal to or less than $\pi$ radians by improving a spatial resolution, that is, decreasing $\delta l$, or improving a time sampling rate, that is, decreasing T. For example, as a method of improving a time sampling rate, an optical frequency multiplexing method having a configuration in which pulses with different optical frequencies are incident at different times has been proposed (refer to, for example, Non Patent Literature 3).

In actual measurement, a failure of the phase unwrapping process due to noise accompanying $\delta\theta_{cal}(l, nT)$ also occurs. In actual measurement, noise of a measurement device such as thermal noise of a PD for detecting light, subsequent noise at an electrical stage, and shot noise due to light is present. Therefore, noise is associated with the in-phase component $I(l, nT)$ and the quadrature component $Q(l, nT)$ in Equation (2), noise is also added to $\theta_{cal}(l, nT)$, and as a result, noise is associated with $\delta\theta_{cal}(l, nT)$. The occurrence of noise in $\delta\theta_{cal}(l, nT)$ causes a probability of erroneous selection of an appropriate integer q.

Regarding this problem, it is possible to take a measure to reduce the probability of erroneous selection of the integer q by reducing the noise generated at $\delta\theta_{cal}(l, nT)$ as much as possible. For example, there has been proposed an optical frequency multiplexing method having a configuration in which pulses with different optical frequencies are incident at sufficiently short time intervals with respect to a state change due to vibration of an optical fiber, and signals obtained by the different optical frequency pulses are averaged (refer to, for example, Patent Literature 1).

Citation List

Patent Literature

Patent Literature 1: Japanese Laid-open Patent Publication No. 2020-169904 A
Patent Literature 2: JP 2017 026503 A refers to vibration distribution measurement on an optical fibre. The light reflection time domain measurement method (OTDR) is used to measure the longitudinal distribution of the vibration from the phase change of reflected light from each point inside the optical fiber, test light with different pulse train frequencies is used and back scattered light is collected.

Non Patent Literature

Non Patent Literature 1: A. Masoudi, T. P. Newson, "Contributed Review: Distributed optical fibre dynamic strain sensing", Review of Scientific Instruments, vol. 87, p. 011501 (2016)
Non Patent Literature 2: Kenichi NISHIGUCHI, Li Che-Hsien, Artur GUZIK, Mitsunori YOKOYAMA, Kinzo MASUDA, "Fabrication of Fiber-Optic Distributed Acoustic Sensor and Its Signal Processing", IEICE Technical Report, 115(202), pp. 29-34 (2015)
Non Patent Literature 3: Y. Wakisaka, D. Iida, H, Oshida, "Distortion-suppressed sampling rate enhancement in phase-OTDR vibration sensing with newly designed FDM pulse sequence for correctly monitoring various waveforms", OFC2020, OSA Technical Digest, paper Th3F.5 (2020)
Non Patent Literature 4: XU XIAOHUA ET AL: "Toward Absolute Phase Change Recovery With InSAR: Correcting for Earth Tides and Phase Unwrapping Ambiguities", IEEE TRANSACTIONS ON GEOSCIENCE AND REMOTE SENSING, IEEE, USA, vol. 58, no. 1, 1 January 2020 (2020-01-01), pages 726-733, XP01 17631 38, ISSN: 0196-2892, DOI: 10.1109/TGRS.201 9.2940207 [retrieved on 2019-12-26], refers to correcting errors tides and phase unwrapping ambiguities in interferometric synthetic aperture radar applications. In order to determine a distance between a satellite of a GNSS and a receiver, and integer number of wavelengths between the satellite and the receiver is measured. in this process, cycle slips may occur need to be corrected.

Summary of Invention

Technical Problem

However, the conventional technique has a problem that apparent large vibration due to a failure of a phase unwrapping process may be erroneously detected in phase measurement data measured for a long time.
For example, in the method disclosed in Patent Literature 1, since the probability of erroneous selection of the integer q due to noise cannot be made zero in principle, a failure of phase unwrapping occurs in data measured for a long time. When a failure of phase unwrapping occurs, it leads to erroneous detection that apparent large vibration is applied at a point where the failure has occurred.

Solution to Problem

The above-described problems are solved and the object is achieved by the subject matter of the independent claims. Advantageous embodiments of the invention are disclosed in the dependent claims. According to an example, a signal processing method executed by a signal processing device includes a phase connection process step of performing a phase connection process on a position in a space and a phase value at each of a plurality of times; a first correction step of performing outlier correction of a phase value for each position in the space in a predetermined direction of the space at a predetermined time among the plurality of times based on a result of the phase connection process; and a second correction step of correcting a phase value at a time other than the predetermined time for each of correction target positions in the first correction step among positions in the space.

Advantageous Effects of Invention

According to the present invention, it is possible to reduce erroneous detection of apparent large vibration due to a failure of a phase unwrapping process in phase measurement data measured for a long time.

Brief Description of Drawings

Fig. 1 is a diagram illustrating a configuration example of a signal processing system according to a first embodiment.
Fig. 2 is a flowchart illustrating a flow of a process of the signal processing system according to the first embodiment.
Fig. 3 is a diagram illustrating an example of a calculation result of a phase before correction.
Fig. 4 is a diagram illustrating an example of a calculation result of a phase after correction.
Fig. 5 is a diagram illustrating an example of a computer that executes a signal processing program.

Description of Embodiments

Hereinafter, embodiments of a signal processing method and a signal processing device according to the present application will be described in detail with reference to the drawings. In addition, the present invention is not limited to the embodiments described below.

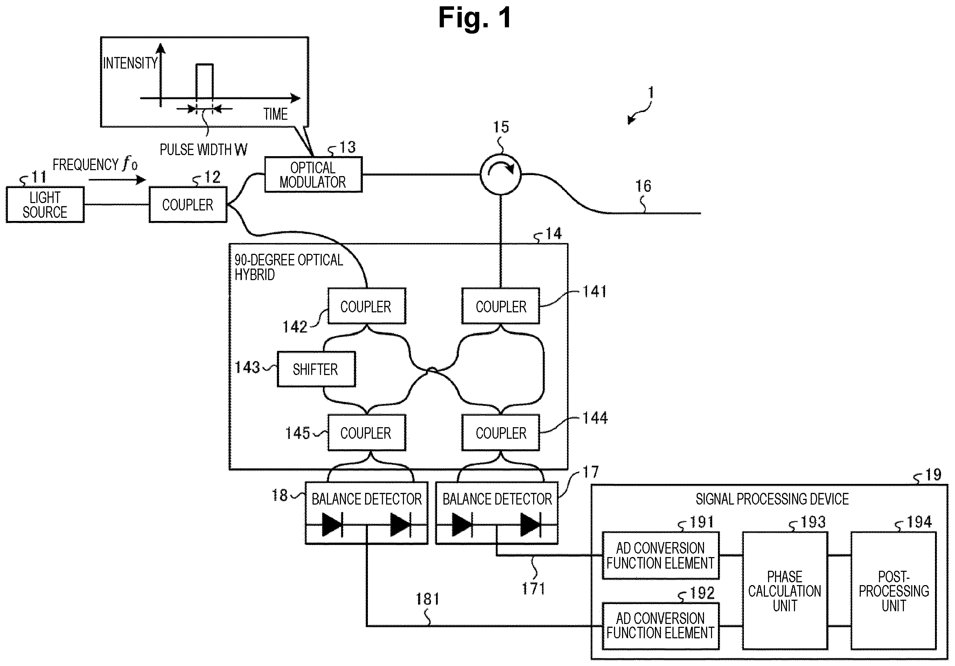

Fig. 1 is a diagram illustrating a configuration example of a signal processing system according to a first embodiment. A signal processing system 1 in Fig. 1 performs DAS-P through coherent detection using a hardware-based processing mechanism using a 90-degree optical hybrid for a reception system. The signal processing system 1 functions as a phase optical time domain reflectometer (OTDR).

However, a signal processing method in the first embodiment reduces erroneous detection of apparent large vibration due to a failure of a phase unwrapping process, and is different from the conventional DAS-P. A signal processing method equivalent to that of the first embodiment may be realized on a software basis by using Hilbert transform.

As illustrated in Fig. 1, a light source 11, a coupler 12, an optical modulator 13, a 90-degree optical hybrid 14, a circulator 15, a measurement target optical fiber 16, a balance detector 17, a balance detector 18, and a signal processing device 19 are included.

The light source 11 emits continuous light having a single wavelength of which a frequency is $f_0$. For example, the light source 11 is a continuous wave (CW) light source. The coupler 12 branches the continuous wave light emitted by the light source 11 into reference light and probe light.

The optical modulator 13 generates a light pulse having a pulse width of W from the probe light branched by the coupler 12. The pulse width W is a value corresponding to a spatial resolution in measurement in an optical fiber longitudinal direction. An optical frequency of the light pulse is set to a value obtained by shifting the frequency $f_0$ by the shift frequency.

In addition, the light pulse generated by the optical modulator 13 may not be a single-frequency pulse as long as it is a method of finally measuring a phase change, and frequency sweeping, frequency multiplexing, and other encoding can be performed.

For example, in a case where the optical modulator 13 uses the frequency multiplexing method disclosed in Patent Literature 1, the generated light pulse is a single light pulse formed by arranging pulses having a frequency of $f_0 + f_i$ (where i is an integer) and a pulse width of W for i = 1, 2, ..., and N (where N is an integer). In this case, $f_i$ is selected such that intensities of scattered light at each time and each point are sufficiently separated to the extent that different values i can be regarded as uncorrelated.

The type of the optical modulator 13 may be any type as long as the light pulse as described above is generated, and the number of optical modulators may be plural. For example, the optical modulator 13 may be a single side-band (SSB) modulator, a frequency-variable acousto-optics (AO) modulator, or the like. The optical modulator 13 may perform intensity modulation by using a semiconductor optical amplifier (SOA) or the like in order to increase an extinction ratio in pulsing.

The light pulse generated by the optical modulator 13 is incident to the measurement target optical fiber 16 via the circulator 15 as probe light.

Here, light scattered at each point in the longitudinal direction of the measurement target optical fiber 16 returns to the circulator 15 as backscattered light and is incident to one input of the 90-degree optical hybrid 14. On the other hand, the reference light branched by the coupler 12 is incident to the other input of the 90-degree optical hybrid 14.

As illustrated in Fig. 1, the 90-degree optical hybrid 14 includes a coupler 141, a coupler 142, a shifter 143, a coupler 144, and a coupler 145.

First, the backscattered light from the measurement target optical fiber 16 is incident to an input of the coupler 141 having a branching ratio of 50:50. The scattered light branched by the coupler 141 is incident to an input of the coupler 145 having a branching ratio of 50:50 and an input of the coupler 144 having a branching ratio of 50:50.

On the other hand, the reference light from the coupler 12 is incident to an input of the coupler 142 having a branching ratio of 50:50. One of reference light beams branched by the coupler 142 is directly incident to the input of the coupler 144.

The shifter 143 shifts a phase of the other reference light beam branched by the coupler 142 by $\pi/2$. The reference light of which the phase has been shifted by the shifter 143 is incident to the input of the coupler 145.

Here, the balance detector 17 detects two outputs of the coupler 144 and acquires an electrical signal 171 of which an analog in-phase component is $I^{analog}$.

The balance detector 18 detects two outputs of the coupler 145 and acquires an electrical signal 181 of which an analog quadrature component is $Q^{analog}$.

The electrical signal 171 and the electrical signal 181 are sent to the signal processing device 19. As illustrated in Fig. 1, the signal processing device 19 includes an AD conversion function element 191, an AD conversion function element 192, a phase calculation unit 193, and a post-processing unit 194.

The AD conversion function element 191 digitizes the analog in-phase component $I^{analog}$ to obtain $I^{digital}$. The AD conversion function element 192 digitizes the analog quadrature component $Q^{analog}$ to obtain $Q^{digital}$.

The phase calculation unit 193 performs phase calculation by using the digitized in-phase component $I^{digital}$ output from the AD conversion function element 191 and the quadrature component $Q^{digital}$ output from the AD conversion function element 192.

For example, in a case where the light pulse generated by the optical modulator 13 has a single frequency, the phase calculation unit 193 can calculate a phase according to Equation (2).

The phase calculation unit 193 may perform appropriate preprocessing. For example, the phase calculation unit 193 may calculate a phase according to Equation (2) after filtering the signals having the in-phase component $I^{digital}$ and the quadrature component $Q^{digital}$ with a digital band pass filter having a signal bandwidth centered on the shift frequency at the time of modulation of the light pulse.

Even in a case where frequency sweeping, frequency multiplexing, or other encoding is performed on the light pulse, the phase calculation unit 193 may calculate the phase by performing appropriate preprocessing. For example, in a case where the optical modulator 13 performs frequency multiplexing disclosed in Patent Literature 1, the phase calculation unit 193 separates signals based on scattered light having pulses at respective frequencies $f_0 + f_i$ (where i = 1, 2, ..., and N) forming the light pulse. That is, the phase calculation unit 193 separates an in-phase component $I_i^{measure}$ and a quadrature component $Q_i^{measure}$ obtained when a pulse at each frequency $f_0 + f_i$ component is incident alone by performing signal processing on $I^{digital}$ in which in-phase components related to all i are superimposed and $Q^{digital}$ in which the quadrature components related to all i are superimposed.

In this case, the phase calculation unit 193 may use any method capable of accurately separating $I_i^{measure}$ and $Q_i^{measure}$ from $I^{digital}$ and $Q^{digital}$. For example, the phase calculation unit 193 can calculate $I_i^{measure}$ and $Q_i^{measure}$ by causing $I^{digital}$ and $Q^{digital}$ to pass through a digital bandpass filter having a center frequency of $f_i$ and a passband of 2/W, and then guaranteeing a phase delay.

The phase calculation unit 193 can calculate a phase by using, for example, averaging of different optical frequency multiplexed signals disclosed in Patent Literature 1 on the basis of $I_i^{measure}$ and $Q_i^{measure}$.

According to a phase calculated by the phase calculation unit 193, there is a case where apparent large vibration due to a failure of the phase unwrapping process is erroneously detected. Therefore, the post-processing unit 194 performs a process of reducing such erroneous detection of apparent large vibration.

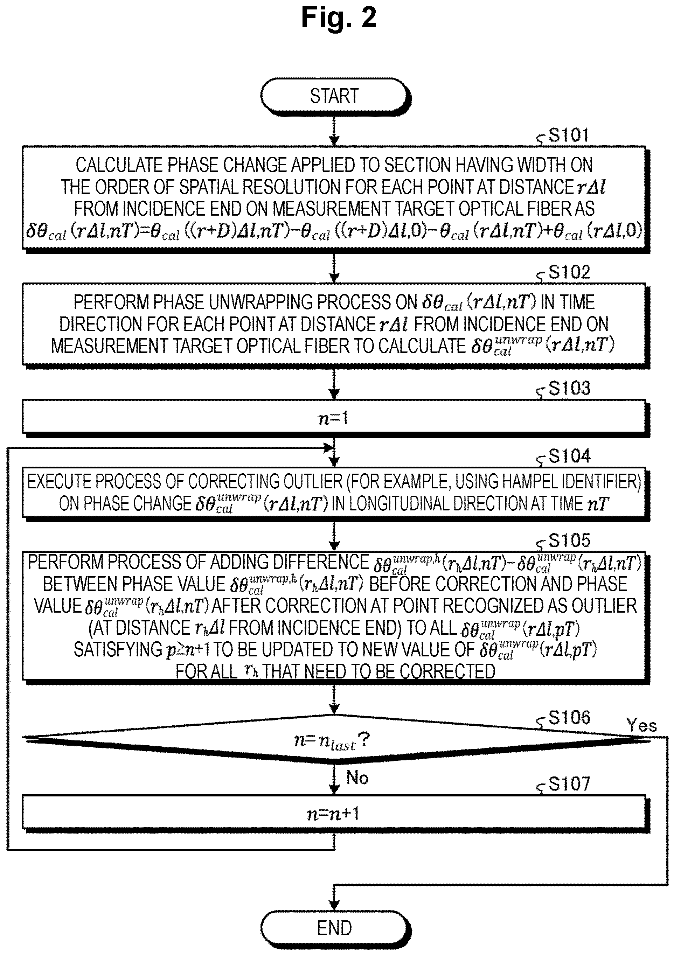

Here, a flow of a process of the post-processing unit 194 will be described with reference to Fig. 2. Fig. 2 is a flowchart illustrating a flow of a process of the signal processing system according to the first embodiment.

Here, the post-processing unit 194 executes a phase connection process step of performing phase connection process on a position in a space and a phase value at each of a plurality of times, a first correction step of performing outlier correction of a phase value at each position in the space in a predetermined direction of the space for a predetermined time among the plurality of times on the basis of a result of the phase connection process, and a second correction step of correcting a phase value at a time other than the predetermined time for each position that is a correction target in the first correction step among the positions in the space.

The phase connection process step corresponds to steps S101 and S102. As described above, the unwrapping process is an example of the phase connection process. The first correction step corresponds to step S104. The second correction step corresponds to step S105.

As illustrated in Fig. 2, the post-processing unit 194 calculates a phase change applied to a section having a width on the order of spatial resolution for each point at a distance $r\Delta l$ from the incidence end on the measurement target optical fiber 16 as in Equation (4) (step S101).

[Math. 4]

$$\delta\theta_{cal}\left(r\Delta l, nT\right) = \theta_{cal}\left((r+D)\Delta l, nT\right) -$$
$$\theta_{cal}\left((r+D)\Delta l, 0\right) - \theta_{cal}\left(r\Delta l, nT\right) + \theta_{cal}\left(r\Delta l, 0\right) \qquad \cdots (4)$$

Step S101 will be described in detail. First, assuming that a phase at the time nT at the distance l obtained as an output of the phase calculation unit 193 is $\theta_{cal}(l, nT)$, the post-processing unit 194 calculates $\delta\theta_{cal}(l, nT)$ as a difference between the phase $\theta_{cal}(l+\delta l, nT)$ at the distance $l + \delta l$ and the phase $\theta_{cal}(l, nT)$ at the distance l. In this case, a value of $\delta l$ is set to a value on the order of spatial resolution.

In addition, it is assumed that the signal processing system 1 operates the AD conversion function element 191 and the AD conversion function element 192 at a high sampling rate such that a sampling period in the longitudinal distance direction determined by an interval of the distance l, that is, a reciprocal of the sampling rate in the longitudinal distance direction, can be a numerical value smaller than $\delta l$.

For example, when measurement is performed with a spatial resolution of 5 m, a light pulse width is 50 ns, and thus, a sampling rate of 20 MHz is sufficient from the viewpoint of spatial resolution. However, in the signal processing system 1, it is assumed that the AD conversion function element 191 and the AD conversion function element 192 are operated at a sampling rate higher than 20 MHz.

For example, when frequency multiplexing is performed, such operation conditions are satisfied in order to separate each frequency component by using the digital band pass filter as described above. For example, in a case where the light pulse width of each frequency is 50 ns and the optical frequency multiplexing number is set to 5, a signal at each optical frequency occupies a band of 40 MHz, and thus the signal processing system 1 operates the AD conversion function element 191 and the AD conversion function element 192 at a sampling rate of 400 MHz or more from the Nyquist theorem. 400 MHz is higher than 20 MHz.

For clearer description, if an interval of the distance 1 is $\Delta l$, and $1 = r\Delta l$ (where r is a non-negative integer), $\theta_{cal}(l, nT) = \theta_{cal}(r\Delta l, nT)$ can be described. Here, $r = 0$ is made correspond to the incidence end.

When an integer D is selected such that $D\Delta l$ is a value on the order of spatial resolution, the integer D is a numerical value of 2 or more since the AD conversion function element 191 and the AD conversion function element 192 are operated at a high sampling rate. For example, when the light pulse width is 50 ns, the spatial resolution is 5 m, but when the sampling rate is 400 MHz, since the interval of the distance 1 is 25 cm, the integer D can be set to 20.

In addition, according to the post-processing unit 194, processing such as reducing the number of sampling points by performing a decimation process or the like on a phase obtained by the phase calculation unit 193 can also be performed as long as an interval of the distance 1 after the processing is in a range smaller than the spatial resolution, and calculation of the integer D may be performed after the processing.

The post-processing unit 194 calculates the phase change applied to the section having a width on the order of spatial resolution at the distance $r\Delta l$ as in Equation (4) with time zero as a reference. As described above, the post-processing unit 194 can calculate a phase value at a position in a range based on a spatial resolution.

Next, the post-processing unit 194 performs a phase unwrapping process on $\delta\theta_{cal}(r\Delta l, nT)$ in the time direction for each point at the distance $r\Delta l$ from the incidence end on the measurement target optical fiber to calculate $\delta\theta_{cal}^{unwrap}(r\Delta l, nT)$ (step S102).

Step S102 will be described in detail. The post-processing unit 194 performs a normal phase unwrapping process based on Equation (3) on $\delta\theta_{cal}(r\Delta l, nT)$ obtained in step S101 to obtain $\delta\theta_{cal}^{unwrap}(r\Delta l, nT)$. However, it is assumed that the phase unwrapping process is performed independently for each distance $r\Delta l$ in a direction in which n increases with $n = 1$ as a start point.

In $\delta\theta_{cal}^{unwrap}(r\Delta l, nT)$, although erroneous detection of apparent large vibration due to a failure of phase unwrapping caused by noise of a measuring device occurs, since a magnitude of the noise randomly changes, the erroneous detection of apparent large vibration also randomly occurs.

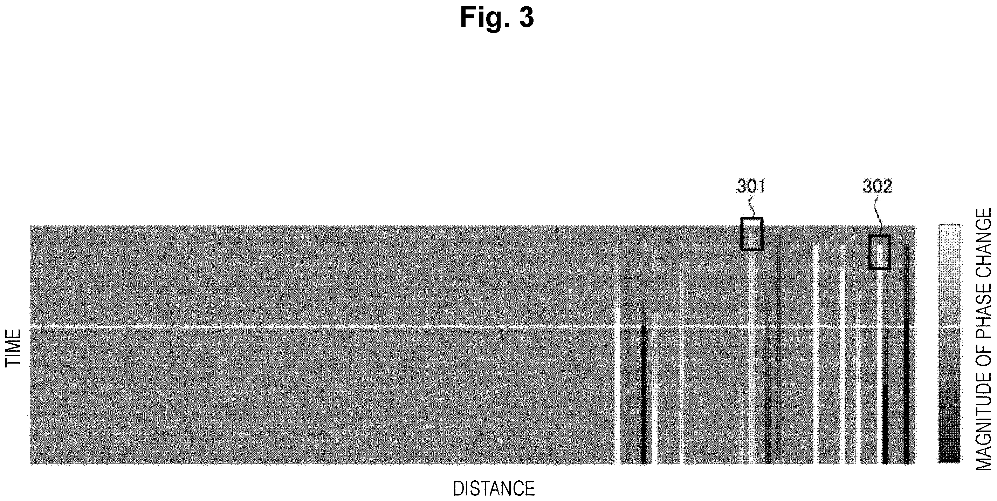

Fig. 3 illustrates a state in which such erroneous detection occurs. Fig. 3 is a diagram illustrating an example of a calculation result of a phase before correction. In Fig. 3, the vertical axis represents a time nT, and the horizontal axis represents a distance l. The color gradient indicates a value of $\delta\theta_{cal}^{unwrap}(r\Delta l, nT)$.

In the example in Fig. 3, erroneous detection of apparent large vibration occurs at portions indicated by the reference numerals 301 and 302, and the like.

In addition, in a two-dimensional map as illustrated in Fig. 3, a portion where the failure of the phase unwrapping occurs randomly occurs, but a cause thereof is that large noise occurs in either $\theta_{cal}(r\Delta l, nT)$ or $\theta_{cal}((r+D)\Delta l, nT)$ that is a source of calculation of $\delta\theta_{cal}(r\Delta l, nT)$ in many cases. For example, in a case where large noise occurs in $\theta_{cal}(r\Delta l, nT)$, it is noted that a probability that erroneous detection of apparent large vibration occurs at the same time increases not only in $\theta_{cal}(r\Delta l, nT)$ but also in $\theta_{cal}((r-D)\Delta l, nT)$.

Since the magnitude of noise added to $\theta_{cal}(r\Delta l, nT)$ is affected by fading, it is also noted that the likelihood of occurrence of erroneous detection of apparent large vibration differs for each optical fiber longitudinal distance point.

As illustrated in Fig. 3, n is incremented by 1 from 1 to $n_{last}$ (steps 103, S106, and S107), and the post-processing unit 194 performs steps S104 and S105 on $\delta\theta_{cal}^{unwrap}(r\Delta l, nT)$ for each n.

In step S104, the post-processing unit 194 executes a process of correcting an outlier (for example, using a Hampel identifier) on the phase change $\delta\theta_{cal}^{unwrap}(r\Delta l, nT)$ in the longitudinal direction at the time nT.

Step S104 will be described in detail. The post-processing unit 194 performs a process of correcting an outlier on the phase change $\delta\theta_{cal}^{unwrap}(r\Delta l, nT)$ in the longitudinal direction at the time nT. As described above, since a portion where the failure of the phase unwrapping occurs is random, the failure of the phase unwrapping at the time nT can be corrected by detecting and correcting the outlier in the longitudinal direction.

As a method of processing the outlier, for example, a method using a Hampel identifier may be used. When the Hampel identifier is used, if the number of left and right sides to be referred to for determining whether the phase $\delta\theta_{cal}^{unwrap}(r\Delta l, nT)$ of $r\Delta l$ in the longitudinal direction is an outlier is k, a numerical value of k can be considered with the above-described D as a reference.

When $k/D$ is sufficiently small, it can be considered that a fiber section $[r\Delta l, (r+D)\Delta l]$ in which $\delta\theta_{cal}^{unwrap}(r\Delta l, nT)$ is observed and a fiber section $[(r\pm k)\Delta l, (r\pm k+D)\Delta l]$ in which $\delta\theta_{cal}^{unwrap}((r\pm k)\Delta l, nT)$ is observed are approximately common. Therefore, it is considered that the phase value $\delta\theta_{cal}^{unwrap}$ gradually changes from $(r-k)\Delta l$ to $r\Delta l$ and from $r\Delta l$ to $(r+k)\Delta l$, and

thus, it is possible to correct the failure of the phase unwrapping by performing outlier detection in the range of $(r-k)\Delta l$ to $(r+k)\Delta l$.

As a specific condition under which k/D can be considered to be sufficiently small, $k \leq D/2$ may be set. This is because the fiber section $[(r\pm k)\Delta l, (r\pm k+D)\Delta l]$ in which $\delta\theta_{cal}^{unwrap}((r\pm k)\Delta l, nT)$ is observed overlaps the fiber section $[r\Delta l, (r+D)\Delta l]$ in which $\delta\theta_{cal}^{unwrap}(r\Delta l, nT)$ is observed by $(r-k)\Delta l$, and when $k \leq D/2$, a value of $(r-k)\Delta l$ is greater than a half value of each section length $D\Delta l$, so that half or more of scatterers contributing to $\delta\theta_{cal}^{unwrap}((r\pm k)\Delta l, nT)$ and scatterers contributing to $\delta\theta_{cal}^{unwrap}(r\Delta l, nT)$ are common as a statistical average.

In the Hampel identifier, a standard deviation evaluated from the median and the median absolute deviation of a phase value between $(r-k)\Delta l$ and $(r+k)\Delta l$, which is a target range, is calculated, and is replaced with the median when a value of $\delta\theta_{cal}^{unwrap}(r\Delta l, nT)$ increases from the median by C times the standard deviation, but as a value of C, C = 3, which is a standard numerical value, may be used. However, this numerical value can be optimized to an optimum numerical value according to a target or the like being measured.

In step S105, the post-processing unit 194 performs a process of adding a difference $\delta\theta_{cal}^{unwrap,h}(r_h\Delta l, nT) - \delta\theta_{cal}^{unwrap}(r_h\Delta l, nT)$ between the phase value $\delta\theta_{cal}^{unwrap}(r_h\Delta l, nT)$ before correction and the phase value $\delta\theta_{cal}^{unwrap,h}(r_h\Delta l, nT)$ after correction at the point recognized as the outlier (at the distance $r_h\Delta l$ from the incidence end) to all $\delta\theta_{cal}^{unwrap}(r\Delta l, pT)$ satisfying $p \geq n + 1$ to be updated to a new value of $\delta\theta_{cal}^{unwrap}(r\Delta l, pT)$ for all $r_h$ that need to be corrected.

Step S105 will be described in detail. A distance from the incidence end to the point where the correction is actually required in step S104 is defined as $r_n\Delta l$, and a corrected value is defined as $\delta\theta_{cal}^{unwrap,h}(r_h\Delta l, nT)$. In this case, since $\delta\theta_{cal}^{unwrap,h}(r_h\Delta l, nT) - \delta\theta_{cal}^{unwrap}(r_h\Delta l, nT)$ can be regarded as a correction value for correcting the failure of the phase unwrapping process, $\delta\theta_{cal}^{unwrap,h}(r_h\Delta l, nT) - \delta\theta_{cal}^{unwrap}(r_h\Delta l, nT)$ is added to all phase values after the time $(n+1)T$ at the point $r_h\Delta l$.

The reason why steps S104 and S105 are performed in ascending order from n = 1 is that, since the phase unwrapping process is performed in step S102 in order from n = 1, when the failure of the phase unwrapping process remains until time $(n-1)T$ in a case of correcting the failure of the phase unwrapping process based on the outlier detection at the time nT, the assumption that the phase value $\delta\theta_{cal}^{unwrap}$ gradually changes between $(r-k)\Delta l$ and $r\Delta l$ and between $r\Delta l$ and $(r+k)\Delta l$ in step S104 cannot be used.

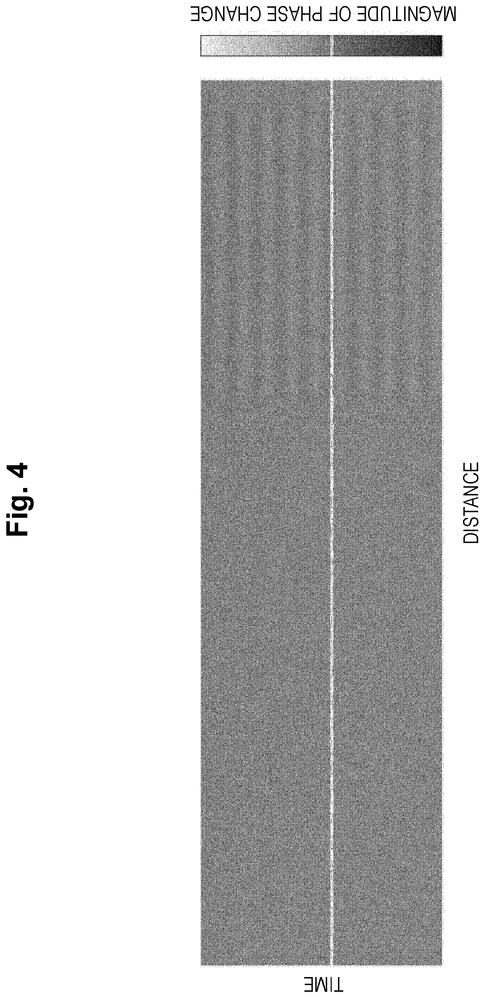

Fig. 4 illustrates a calculation example of a final phase obtained by repeatedly performing steps S104 and S105. Fig. 4 is a diagram illustrating an example of a corrected phase calculation result. In the example in Fig. 4, erroneous detection of apparent large vibration illustrated in Fig. 3 is corrected.

In addition, $\delta\theta_{cal}(r\Delta l, nT)$ can be calculated with reference to the last point $n_{last}T$ of the measured time sequence nT (where n = 1, 2, ...) in step S101, and the phase unwrapping process can be performed in a direction in which n decreases from $n_{last}T$ in step S102. In this case, steps S104 and S105 are also performed in descending order of n from $(n_{last}-1)T$. However, it is necessary to reverse the direction in which the correction value in step S105 is added, and $\delta\theta_{cal}^{unwrap,h}(r_h\Delta l, nT) - \delta\theta_{cal}^{unwrap}(r_h\Delta l, nT)$ is added for all points before the time $(n-1)T$.

More generally, the post-processing unit 194 may calculate $\delta\theta_{cal}(r\Delta l, nT)$ with the time n'T as a reference time in step S101, and perform the phase unwrapping process with n' as a start point in step S102 in both a direction in which n decreases and a direction in which n increases.

In this case, the post-processing unit 194 also performs step S104 in both ascending order of n from $(n'-1)T$ and descending order of n from $(n'+1)T$ when viewed on the time axis.

As described above, the post-processing unit 194 may perform correction of adding the correction value to the phase value at a first time earlier than the reference time, and perform correction of adding the correction value to the phase value in order from the later side for each time earlier than the first time.

The post-processing unit 194 may perform correction of adding the correction value to the phase value at a second time later than the reference time, and perform correction of adding the correction value to the phase value in order from the earlier side for each time later than the second time in the second correction step.

As described in the first embodiment, the AD conversion function element 191 and the AD conversion function element 192 perform sampling at a higher speed than a constraint determined by a spatial resolution, and thus it is possible to use an outlier correction and reduce erroneous detection of apparent large vibration caused by a failure of phase unwrapping. On the other hand, since such sampling conditions are naturally satisfied in a case where frequency multiplexing or the like is performed, the first embodiment can be realized without changing the conventional device configuration.

The conditions that the AD conversion function element 191 and the AD conversion function element 192 perform sampling at a higher speed than the constraint determined by the spatial resolution may not be essential in some cases, for example, in a case where a change in measurement target vibration is gentler than the spatial resolution.

In a case where the change in the measurement target vibration is gentler than the spatial resolution, the outlier correction may be performed at a data point included in a spatial range in which the measurement target vibration can be regarded as not changing in step S104. Therefore, there is a case where a sufficient data point for performing the outlier correction can be obtained even in the case of sampling slower than the constraint determined by the spatial resolution.

That is, in a case where the change in the measurement target vibration is gentler than the spatial resolution, the first embodiment can be implemented by performing sampling at a higher speed than the change in the measurement target vibration.

[System configuration and others] Each constituent of each illustrated device is functionally conceptual, and does not necessarily need to be physically configured as illustrated. That is, a specific form of distribution and integration of devices is not limited to the illustrated form, and all or some thereof may be functionally or physically distributed or integrated in any unit according to various loads, usage conditions, and the like. The whole or any part of each processing function performed in each device may be realized by a central processing unit (CPU) and a program analyzed and executed by the CPU, or may be realized as hardware by wired logic. In addition, the program may be executed not only by a CPU but also by another processor such as a GPU.

Among the respective processes described in the present embodiment, all or some of the processes described as being automatically performed may be manually performed, or all or some of the processes described as being manually performed may be automatically performed according to a known method. The processing procedure, the control procedure, the specific name, and the information including various types of data and parameters that are described in the document and the drawings can be freely changed unless otherwise specified.

[Program] As an embodiment, the signal processing device 19 can be implemented by installing a signal processing program for executing the signal processing described above as package software or online software in a desired computer. For example, it is possible to cause an information processing device to function as the signal processing device 19 by causing the information processing device to execute the signal processing program described above. The information processing device described here includes a desktop or a laptop personal computer. The information processing device also includes a mobile communication terminal such as a smartphone, a mobile phone, and a personal handyphone system (PHS), a slate terminal such as a personal digital assistant (PDA), and the like.

The signal processing device 19 can also be implemented as a signal processing server device that sets a terminal device used by a user as a client and provides a service related to the above signal processing to the client. For example, the signal processing server device is implemented as a server device that provides a signal processing service having an output from the balance detector as an input and a result of phase calculation as an output. In this case, the management server device may be implemented as a web server, or may be implemented as a cloud that provides a service related to the above signal processing by outsourcing.

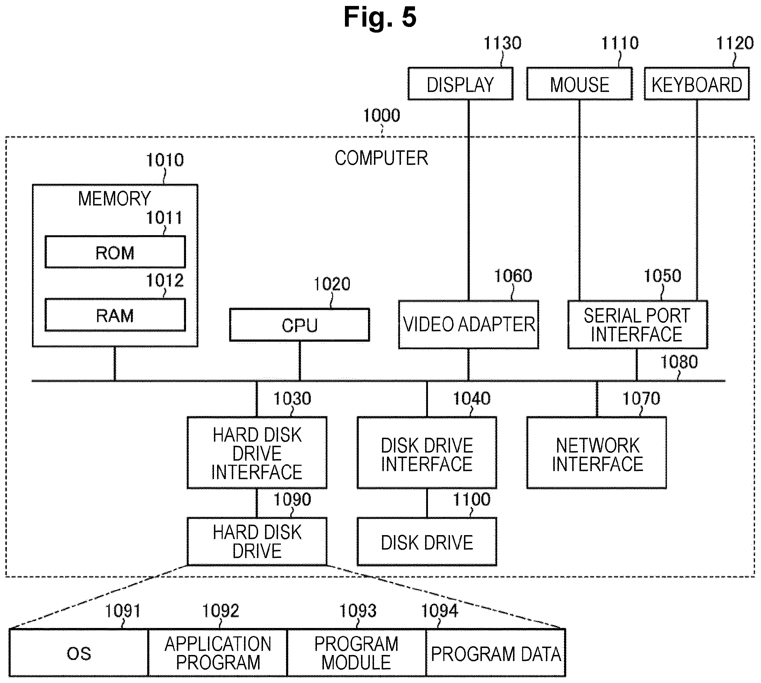

Fig. 5 is a diagram illustrating an example of a computer that executes a signal processing program. A computer 1000 includes, for example, a memory 1010 and a CPU 1020. The computer 1000 also includes a hard disk drive interface 1030, a disk drive interface 1040, a serial port interface 1050, a video adapter 1060, and a network interface 1070. These units are connected to each other via a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disc is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the program that defines each process performed by the signal processing device 19 is implemented as the program module 1093 in which codes executable by the computer are described. The program module 1093 is stored in, for example, the hard disk drive 1090. For example, the program module 1093 for executing processing similar to that of the functional configurations in the signal processing device 19 is stored in the hard disk drive 1090. In addition, the hard disk drive 1090 may be replaced with a solid state drive (SSD).

Setting data used in the processing of the above-described embodiment is stored, for example, in the memory 1010 or the hard disk drive 1090 as the program data 1094. The CPU 1020 reads the program module 1093 and the program data 1094 stored in the memory 1010 and the hard disk drive 1090 to the RAM 1012 as necessary, and executes the processing of the above-described embodiment.

In addition, the program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (a local area network (LAN), a wide area network (WAN), or the like). The program module 1093 and the program data 1094 may be read by the CPU 1020 from another computer via the network interface 1070.

Reference Signs List

1 Signal processing system
11 Light source
12, 141, 142, 144, 145 Coupler
13 Optical modulator
14 90-degree optical hybrid
15 Circulator
16 Measurement target optical fiber
17, 18 Balance detector
19 Signal processing device
143 Shifter
171, 181 Electrical signal
191, 192 AD conversion function element
193 Phase calculation unit
194 Post-processing unit

**Claims**

1. A signal processing method executed by a signal processing device (19), comprising:

   a phase connection process step (S101, S102) of performing a phase connection process on a position on an optical fiber obtained by causing a light pulse to be incident to the optical fiber, the position being in a range based on a spatial resolution and a phase value at each of a plurality of times;
   a first correction step (S104) of performing outlier correction of a phase value for each position on the optical fiber in a longitudinal direction of the optical fiber at a predetermined time among the plurality of times based on a result of the phase connection process; and
   a second correction step (S105) of correcting a phase value at a time other than the predetermined time for each of correction target positions in the first correction step among positions on the optical fiber, wherein the second correction step includes adding a difference between the phase value before and after the first correction step.

2. The signal processing method according to claim 1, wherein

   in the first correction step, correction of adding a correction value to a phase value at a first time earlier than a reference time is performed, and
   in the second correction step, correction of adding the correction value to the phase value in order from a later side for each of times earlier than the first time is performed.

3. The signal processing method according to claim 1, wherein

   in the first correction step, correction of adding a correction value to a phase value at a second time later than a reference time is performed, and
   in the second correction step, correction of adding the correction value to the phase value in order from an earlier side for each of times later than the second time is performed.

4. The signal processing method according to any one of claims 1 to 3, wherein
   in the first correction step, correction using a Hampel identifier is performed.

5. A signal processing device (19) comprising:

   a phase connection process unit configured to perform a phase connection process on a position on an optical fiber obtained by causing a light pulse to be incident to the optical fiber, the position being in a range based on a spatial resolution and a phase value at each of a plurality of times;
   a first correction unit configured to perform outlier correction of a phase value for each position on the optical fiber in a longitudinal direction of the optical fiber at a predetermined time among the plurality of times based on a result of the phase connection process; and
   a second correction unit configured to correct a phase value at a time other than the predetermined time for each of correction target positions of the first correction unit among positions on the optical fiber, wherein the second correction step includes adding a difference between the phase value before and after the first correction step.

**Patentansprüche**

1. Signalverarbeitungsverfahren, das durch eine Signalverarbeitungsvorrichtung (19) ausgeführt wird, umfassend:

   einen Phasenverbindungsprozessschritt (S101, S102) des Ausführens eines Phasenverbindungsprozesses auf einer Position auf einer optischen Faser, die erhalten wird, indem veranlasst wird, dass ein Lichtpuls auf die optische Faser einfällt, wobei die Position in einem Bereich basierend auf einer räumlichen Auflösung und einem Phasenwert zu jedem von einer Vielzahl von Zeitpunkten liegt;
   einen ersten Korrekturschritt (S104) des Ausführens einer Ausreißerkorrektur eines Phasenwerts für jede Position auf der optischen Faser in einer Längsrichtung der optischen Faser zu einem vorgegebenen Zeitpunkt unter der Vielzahl von Zeitpunkten basierend auf einem Ergebnis des Phasenverbindungsprozesses; und
   einen zweiten Korrekturschritt (S105) des Korrigierens eines Phasenwerts zu einem anderen Zeitpunkt als dem vorgegebenen Zeitpunkt für jede der Korrekturzielpositionen im ersten Korrekturschritt unter Positionen auf der optischen Faser, wobei der zweite Korrekturschritt das Addieren einer Differenz zwischen dem Phasenwert vor und nach dem ersten Korrekturschritt einschließt.

2. Signalverarbeitungsverfahren nach Anspruch 1, wobei

   im ersten Korrekturschritt eine Korrektur des Addierens eines Korrekturwerts zu einem Phasenwert zu einem ersten Zeitpunkt früher als ein Referenzzeitpunkt durchgeführt wird, und
   im zweiten Korrekturschritt eine Korrektur des Addierens des Korrekturwerts zu dem Phasenwert in der Reihenfolge von einer späteren Seite aus für jeden der Zeitpunkte früher als der erste Zeitpunkt durchgeführt wird.

3. Signalverarbeitungsverfahren nach Anspruch 1, wobei

   im ersten Korrekturschritt eine Korrektur des Addierens eines Korrekturwerts zu einem Phasenwert zu einem zweiten Zeitpunkt später als ein Referenzzeitpunkt durchgeführt wird, und
   im zweiten Korrekturschritt eine Korrektur des Addierens des Korrekturwerts zu dem Phasenwert in der Reihenfolge von einer früheren Seite aus für jeden der Zeitpunkte später als der zweite Zeitpunkt durchgeführt wird.

4. Signalverarbeitungsverfahren nach einem der Ansprüche 1 bis 3, wobei
   im ersten Korrekturschritt eine Korrektur unter Verwendung eines Hampel-Identifikators durchgeführt wird.

5. Signalverarbeitungsvorrichtung (19), umfassend:

   eine Phasenverbindungsprozesseinheit, die ausgebildet ist, um einen Phasenverbindungsprozess auf einer Position auf einer optischen Faser auszuführen, die erhalten wird, indem veranlasst wird, dass ein Lichtpuls auf die optische Faser einfällt, wobei die Position in einem Bereich basierend auf einer räumlichen Auflösung und einem Phasenwert zu jedem von einer Vielzahl von Zeitpunkten liegt;
   eine erste Korrektureinheit, die ausgebildet ist, um eine Ausreißerkorrektur eines Phasenwerts für jede Position auf der optischen Faser in einer Längsrichtung der optischen Faser zu einem vorgegebenen Zeitpunkt unter der Vielzahl von Zeitpunkten basierend auf einem Ergebnis des Phasenverbindungsprozesses auszuführen; und
   eine zweite Korrektureinheit, die ausgebildet ist, um einen Phasenwert zu einem anderen Zeitpunkt als dem vorgegebenen Zeitpunkt für jede der Korrekturzielpositionen der ersten Korrektureinheit unter Positionen auf der optischen Faser zu korrigieren, wobei der zweite Korrekturschritt das Addieren einer Differenz zwischen dem Phasenwert vor und nach dem ersten Korrekturschritt einschließt.

**Revendications**

1. Procédé de traitement de signal mis en œuvre par un dispositif (19) de traitement de signal, comprenant :

   une étape de traitement de connexion de phase (S101, S102) consistant à mettre en œuvre un traitement de connexion de phase sur une position sur une fibre optique obtenue en faisant en sorte qu'une impulsion lumineuse soit incidente sur la fibre optique, la position étant dans une plage basée sur une résolution spatiale et une valeur de phase à chacun d'une pluralité de moments ;

une première étape de correction (S104) consistant à mettre en œuvre une correction de valeur aberrante d'une valeur de phase pour chaque position sur la fibre optique dans une direction longitudinale de la fibre optique à un moment prédéterminé parmi la pluralité de moments sur la base d'un résultat du processus de connexion de phase ; et

une seconde étape de correction (S105) consistant à corriger une valeur de phase à un moment autre que le moment prédéterminé pour chacune des positions cibles de correction dans la première étape de correction parmi des positions sur la fibre optique, dans lequel la seconde étape de correction inclut l'ajout d'une différence entre la valeur de phase avant et après la première étape de correction.

2.  Procédé de traitement de signal selon la revendication 1, dans lequel

dans la première étape de correction, une correction consistant à ajouter une valeur de correction à une valeur de phase à un premier moment antérieur à un moment de référence est mise en œuvre, et
dans la seconde étape de correction, une correction consistant à ajouter la valeur de correction à la valeur de phase dans l'ordre à partir d'un côté plus tardif pour chacun des moments antérieurs au premier moment est mise en œuvre.

3.  Procédé de traitement de signal selon la revendication 1, dans lequel

dans la première étape de correction, une correction consistant à ajouter une valeur de correction à une valeur de phase à un second moment postérieur à un moment de référence est mise en œuvre, et
dans la seconde étape de correction, une correction consistant à ajouter la valeur de correction à la valeur de phase dans l'ordre à partir d'un côté plus précoce pour chacun des moments postérieurs au second moment est mise en œuvre.

4.  Procédé de traitement de signal selon l'une quelconque des revendications 1 à 3, dans lequel
dans la première étape de correction, une correction utilisant un identifiant de Hampel est mise en œuvre.

5.  Dispositif (19) de traitement de signal comprenant :

une unité de traitement de connexion de phase configurée pour mettre en œuvre un traitement de connexion de phase sur une position sur une fibre optique obtenue en faisant en sorte qu'une impulsion lumineuse soit incidente sur la fibre optique, la position étant dans une plage basée sur une résolution spatiale et une valeur de phase à chacun d'une pluralité de moments ;
une première unité de correction configurée pour mettre en œuvre une correction de valeur aberrante d'une valeur de phase pour chaque position sur la fibre optique dans une direction longitudinale de la fibre optique à un moment prédéterminé parmi la pluralité de moments sur la base d'un résultat du processus de connexion de phase ; et
une seconde étape de correction configurée pour corriger une valeur de phase à un moment autre que le moment prédéterminé pour chacune des positions cibles de correction de la première unité de correction parmi des positions sur la fibre optique, dans lequel la seconde étape de correction inclut l'ajout d'une différence entre la valeur de phase avant et après la première étape de correction.

**Fig. 1**

# Fig. 2

```
                           START
                             │
                             ▼                                    ⌐S101
┌─────────────────────────────────────────────────────────────────┐
│       CALCULATE PHASE CHANGE APPLIED TO SECTION HAVING WIDTH ON    │
│  THE ORDER OF SPATIAL RESOLUTION FOR EACH POINT AT DISTANCE rΔl    │
│    FROM INCIDENCE END ON MEASUREMENT TARGET OPTICAL FIBER AS       │
│ δθcal(rΔl,nT)=θcal((r+D)Δl,nT)−θcal((r+D)Δl,0)−θcal(rΔl,nT)+θcal(rΔl,0) │
└─────────────────────────────────────────────────────────────────┘
```

$$\delta\theta_{cal}(r\Delta l,nT)=\theta_{cal}((r+D)\Delta l,nT)-\theta_{cal}((r+D)\Delta l,0)-\theta_{cal}(r\Delta l,nT)+\theta_{cal}(r\Delta l,0)$$

**S102**

PERFORM PHASE UNWRAPPING PROCESS ON $\delta\theta_{cal}(r\Delta l,nT)$ IN TIME DIRECTION FOR EACH POINT AT DISTANCE $r\Delta l$ FROM INCIDENCE END ON MEASUREMENT TARGET OPTICAL FIBER TO CALCULATE $\delta\theta_{cal}^{unwrap}(r\Delta l,nT)$

**S103**

$$n=1$$

**S104**

EXECUTE PROCESS OF CORRECTING OUTLIER (FOR EXAMPLE, USING HAMPEL IDENTIFIER) ON PHASE CHANGE $\delta\theta_{cal}^{unwrap}(r\Delta l,nT)$ IN LONGITUDINAL DIRECTION AT TIME $nT$

**S105**

PERFORM PROCESS OF ADDING DIFFERENCE $\delta\theta_{cal}^{unwrap,h}(r_h\Delta l,nT)-\delta\theta_{cal}^{unwrap}(r_h\Delta l,nT)$ BETWEEN PHASE VALUE $\delta\theta_{cal}^{unwrap,h}(r_h\Delta l,nT)$ BEFORE CORRECTION AND PHASE VALUE $\delta\theta_{cal}^{unwrap}(r_h\Delta l,nT)$ AFTER CORRECTION AT POINT RECOGNIZED AS OUTLIER (AT DISTANCE $r_h\Delta l$ FROM INCIDENCE END) TO ALL $\delta\theta_{cal}^{unwrap}(r\Delta l,pT)$ SATISFYING $p\geq n+1$ TO BE UPDATED TO NEW VALUE OF $\delta\theta_{cal}^{unwrap}(r\Delta l,pT)$ FOR ALL $r_h$ THAT NEED TO BE CORRECTED

**S106**

$n=n_{last}$? — Yes

No

**S107**

$$n=n+1$$

END

# Fig. 3

MAGNITUDE OF PHASE CHANGE

302

301

TIME

DISTANCE

## Fig. 4

MAGNITUDE OF PHASE CHANGE

DISTANCE

TIME

# Fig. 5

EP 4 296 624 B1

## REFERENCES CITED IN THE DESCRIPTION

**Patent documents cited in the description**

- JP 2020169904 A

- JP 2017026503 A

**Non-patent literature cited in the description**

- **A. MASOUDI** ; **T. P. NEWSON**. Contributed Review: Distributed optical fibre dynamic strain sensing. *Review of Scientific Instruments*, 2016, vol. 87, 011501
- **KENICHI NISHIGUCHI** ; **LI CHE-HSIEN** ; **ARTUR GUZIK** ; **MITSUNORI YOKOYAMA** ; **KINZO MASU-DA**. Fabrication of Fiber-Optic Distributed Acoustic Sensor and Its Signal Processing. *IEICE Technical Report*, 2015, vol. 115 (202), 29-34

- **Y. WAKISAKA** ; **D. IIDA** ; **H, OSHIDA**. Distortion-suppressed sampling rate enhancement in phase-OTDR vibration sensing with newly designed FDM pulse sequence for correctly monitoring various waveforms. *OFC2020, OSA Technical Digest*, 2020
- Toward Absolute Phase Change Recovery With InSAR: Correcting for Earth Tides and Phase Unwrapping Ambiguities. **XU XIAOHUA et al.** IEEE TRANSACTIONS ON GEOSCIENCE AND RE-MOTE SENSING. IEEE, 26 December 2019, vol. 58, 726-733